(19) **Europäisches Patentamt European Patent Office Office européen des brevets**

(11) **EP 3 706 066 B1**

(12) **EUROPEAN PATENT SPECIFICATION**

(45) Date of publication and mention of the grant of the patent:
**18.05.2022 Bulletin 2022/20**

(21) Application number: **19161026.0**

(22) Date of filing: **06.03.2019**

(51) International Patent Classification (IPC):
**G01M 3/38** *(2006.01)*    **E03B 7/07** *(2006.01)*
**G01M 3/28** *(2006.01)*    **G06Q 50/06** *(2012.01)*

(52) Cooperative Patent Classification (CPC):
**G06Q 50/06; E03B 7/071; E03B 7/075; G01M 3/2815; G01M 3/38;** Y02A 20/15

(54) **SYSTEM FOR MONITORING A WATER DISTRIBUTION NETWORK**

SYSTEM ZUR ÜBERWACHUNG EINES WASSERVERSORGUNGSNETZES

SYSTÈME POUR LA SURVEILLANCE D'UN RÉSEAU DE DISTRIBUTION D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.09.2020 Bulletin 2020/37**

(73) Proprietors:
- **Engineering Ingegneria Informatica S.p.A.**
  **00144 Roma (IT)**
- **Apphia S.r.l.**
  **73100 Lecce (IT)**
- **Idragest S.r.l.**
  **95123 Catania (IT)**

(72) Inventors:
- **GIANGRECO, Enza**
  **00144 ROMA (IT)**
- **ALESSI, Marco**
  **00144 ROMA (IT)**
- **CATALDO, Marco**
  **73100 LECCE (IT)**
- **CALABRESE, Francesca**
  **73100 LECCE (IT)**
- **BORZI, Angelo**
  **95123 CATANIA (IT)**
- **DE MARIA, Mario**
  **95123 CATANIA (IT)**
- **CANNIZZARO, Donatella**
  **95123 CATANIA (IT)**

(74) Representative: **Conversano, Gabriele Laforgia, Bruni & Partners srl Via Michele Garruba, 3 70122 Bari (IT)**

(56) References cited:
**US-A1- 2003 066 359**    **US-B2- 10 094 732**

- **TAKASHIMA S ET AL: "A water flowmeter using dual fiber Bragg grating sensors and cross-correlation technique", SENSORS AND ACTUATORS A: PHYS, ELSEVIER BV, NL, vol. 116, no. 1, 4 October 2004 (2004-10-04), pages 66-74, XP004559572, ISSN: 0924-4247, DOI: 10.1016/J.SNA.2004.03.026**

## Description

The present invention relates to a system comprising a plurality of physical devices and a computer program implemented on suitable computing means for waterworks monitoring, aiming at identifying and localizing possible leaks.

According to good current practices, the leaks localization process in a water distribution system comprises a first pre-localization step, in which for example network physical districtualization techniques, water balance and minimum night consumption analysis evaluation in order to restrict the research area are adopted, and a following step of punctual localization by using acoustic, electro-acoustic and correlative techniques, passive observation, tracer gases, infrared analysis and georadar usage (GPR).

Recently, technological and IT market developments have favored also network information infrastructuring processes, thus overcoming also the concept of physical districts in favour of virtual districts managed and monitored by means of sensors, actuators and analysis algorithms.

Compared to the devices known at the state of the art, the system described in the present invention, which comprises devices for detecting field values on waterworks and a computer software of the same, is aimed at improving the efficiency of the whole localization process as a function of the values detected by measuring devices in the field, thus reducing times and costs currently associated to leaks research operations.

Prior art

Document US 10094732 B2 (LINFORD PAUL [GB]; SYRINIX LTD [GB]) 9 October 2018 discloses a waterworks monitoring system aimed at identifying and localizing leaks wherein the system comprises a remote computer containing simulation models for detecting leaks and sensors connected to the remote computer.

Document TAKASHIMA S ET AL: "A water flowmeter using dual fiber Bragg grating sensors and cross-correlation technique",SENSORS AND ACTUATORS A: PHYS, ELSEVIER BV, NL, vol. 116, no. 1, 4 October 2004 (2004-10-04), pages 66-74, ISSN: 0924-4247, DOI: 10.1016/J.SNA.2004.03.026, discloses a fiber Bragg grating which is used for measuring pressure and flowrate in a pipe.

Document US 2003/066359 A1 (GYSLING DANIEL L [US] ET AL) 10 April 2003, discloses a fiber Bragg grating for measuring pressure and flowrate. Description of the invention As yet said, object of the present invention is a waterworks monitoring system aiming at identifying and localizing possible leaks, which comprises:

(i) a plurality of sensors for measuring pressure, flowrate and optionally acoustic vibrations in various points of a water distribution system;
(ii) connectors of said sensors, configured to allow the value measured by each one of said sensors to be detected and transmitted to remote computing means;
(iii) computing means on which there are implemented algorithms for analyzing the data detected in the field, in order to identify and localize water leaks.

With reference to point (i), the sensors used in the system according to the present invention can comprise sensors of the following types:

(a) pressure sensors;
(b) flow sensors;
(c) optionally hydrophones/accelerometers. Sensors belonging to each one of these types are conveniently realized, according to what described in detail in the following, so that they can be installed in typical waterworks enviromental conditions and, in case of drinking water distribution systems, in materials compatible with contact with drinking water. The architecture of the leaks detecting system according to the invention comprises three levels:

- the field level, comprising sensors configured so that they acquire network important parameters (pressure, flowrate, acoustic vibrations);
- the communication level, comprising devices for data transmission from sensors to remote control center;
- the analysis level, comprising computing means having access to a database on which there are configured descriptive information about the waterworks under study, and on which there are implemented computer programs configured to analyze, in addition to such descriptive information, the data detected in the field, and to localize leaks.

Therefore, in order to use such system, it is needed:

A. to install field sensoristics and data acquiring, transmission and processing systems;
B. to acquire information concerning the type of waterworks (for example geometrical configuration, diameters and materials in the pipes in the various sections),
C. to acquire the data detected by sensors installed during step A and to make them accessible to the computing means in order to carry out the data analysis operations.

With the data detected in this way, by means of the software analysis, the system:

D. pre-localizes leaks on the basis of scenarios simulated with a water network model and on the basis of pressure and flow data detected at the moment, thus individuating a group of zones inside the waterworks where the leaks probably occurred,

E. carries out a punctual localization of the leaks by cross-correlation between the signals detected by hydrophones/accelerometers provided inside or near said zones where the leaks probably occurred. In this way, the system provides indications which allow the operators to carry out a targeted maintenance intervention on leaks points, thus saving time and costs, and as a consequence, thus reaching a better efficient service.

Description of used sensoristics

According to the invention, the proposed leaks detecting system uses optical fiber sensors with Bragg grating (FBG).

Since they do not have electronic components and since they are made in highly durable material, FBG sensors are resistant also in chemically aggressive environments.

These sensors are installed differently in case of yet existent pipes or of newly installed waterworks. In case of yet existent pipes, the sensors are installed in fact by using products yet provided in the waterworks to be monitored, such for example hydrants, charge plugs, discharge tanks, and control bars. In case of ex-novo waterworks instead, in addition to the just described installation mode, it is possible to install chains of sensors provided with FBG along the whole pipe, at a suitable distance and according to the network type, thus exploiting all the advantages relating to the use of optical fiber which, in this case would run along the same pipe. Functioning principle of the optical sensor with Bragg grating

Generally, optical fibers are made up of coaxially structured glass or polymeric material, at whose center there is a filament with circular section, called core, typically with diameter 5-9 $\mu$m. Therearound there is a layer, called cladding, with outer diameter of 125 $\mu$m. Fiber Bragg Grating (FBG) type sensor is realized inside an optical fiber by photo-etching the core of the optical fiber by means of an ultraviolet laser by using a phase mask. The photo-etching provides in the fiber a periodic modulation, with A period, of the optical fiber refractive index. When a light signal (coming from a led or laser) goes through the optical fiber, each Bragg grating reflects light with a characteristic wavelength $\lambda_{Brag}$ and let all the others go through it. While the photo-etching modulation A varies, the particular reflected wavelength varies, according to the formula:

$$\lambda_{Brag} = 2n\lambda \quad (eq. 1)$$

where n is the optical fiber refractive index. Therefore, each effect (deformation, vibration, stress, pressure) causing a variation of A period on the grating or a variation of the grating refractive index "n" determines a change of the Bragg wavelength "$\lambda'_{Brag}$" and so it can be measured. By measuring the wavelength spectrum variation, by a suitable calibration the measure of the observed parameter is inferred.

Bragg gratings (FBG), which are the sensible elements of the pressure sensors (manometers), flow sensors (flowmeters) and vibration sensors (accelerometers) used in the devices according to embodiments of the invention, have been realized so that the wavelength variation bands of Bragg gratings realized on various sensors are not overlapped and are contained inside the optical spectrum analyzer band, so that the values detected by more sensors can be detected by only one analyzer.

With reference to pressure, flowrate and acoustic vibrations measuring in a waterworks point, the system comprises:

- an optical fiber in which Bragg gratings are photo-etched at the sensors;
- a wide band light source;
- an optical spectrum analyzer for the reflected wave.

Moreover, at data transmission level, according to a preferred embodiment, the system comprises:

- a device able to file data locally (data-logger), connected to said optical spectrum analyzer apt to acquire data coming from sensors;
- a concentration data communication system, with low frequency radio transmission, to transmit data from the device to the concentrator;
- a concentrator configured to receive data from the communication systems and to transmit them to the remote control center.

Description of the sensor features

As yet said, the system comprises one or more of the following sensors:

- manometer, for measuring the pressure of the fluid inside the pipe;
- flowmeter, which detects the water speed, and thus allows flowrate in the relating pipe section to be calculated;
- accelerometer, which measures acoustic vibrations spread along the pipe.

Conveniently, manometer and flowmeter can be introduced in the pipe by simple perforation and introduction by means of grip collar with bracket.

According to a preferred embodiment, two of the three above described sensors (flowmeter and manometer) can be installed by means of only one connection point to waterworks. Even an accelerometer can be put in contact to the pipe near such measuring point.

Description of a preferred embodiment of an FBG manometer The system according to the present invention uses a manometer (1) which carries out pressure detection as a function of the deformation of a membrane (10) on which it is glued an optical fiber (11) with a Bragg grating (12), whose deformation is a function of the membrane deformation. Conveniently, the membrane (10) can be of circular shape, with thickness about between 1 and 2 mm, and with a diameter suitable for the installation in common waterworks sections (approximately about 20 mm). The membrane is arranged inside a hollow element in stainless steel, fastened to the pipe so that the membrane is exposed to water pressure.

The membrane (10) is realized in fiber-reinforced composite material, with sensors incorporated in the membrane production step, or in stainless steel, with sensors glued to the membrane upper surface (so that it is detected a stretching strain), by means of bi-component epoxy structural adhesive (ARALDITE® type), possibly protected with paint and/or silicone protection.

In another embodiment, not covered by the claimed invention, moreover the pressure sensor comprises another Bragg grating, installed on a part of said sensor not deforming after pressure, such for example a cylindrical body, so that it is subject only to deformation due to temperature. In this way, from the deformation of the grating fastened to the membrane the contribution due to temperature and not to water pressure can be subtracted.

Description of a preferred embodiment of an FBG hydrophone/accelerometer

The hydrophone (2) is an accelerometer configured to detect the typical frequencies of vibrations produced by water leaks. Approximately and not limitingly these vibrations are between 100 and 800 Hz.

The functioning principle is based on the variation of the wavelength of the reflection peak of the FBG element, when the fiber where it is localized is subject to a stress (compression and/or tension). For relatively small signals the reflectivity curve varies linearly with the deformation applied to the optical fiber and/or substrate on which this latter is fixed. This allows speed and acceleration to be determined by means of the mechanical response of a sensor in direct or indirect contact with the pipe to be monitored, with which the hydrophone is connected.

Preferably, the accelerometer according to the invention comprises a hollow vertical cylinder (21), wherein it is fixed a thin foil (22) (with thicknesses approximately of a millimeter tenth) sensorized by suitable gluing of an FBG grating (23), while the base is put in direct or indirect contact with the pipe to be monitored (24).

Said thin foil (22) is preferably a metal membrane, preferably in ferro-magnetic material, such for example Metglass, at whose center it is glued an optical fiber on which the Bragg grating is realized. The membrane is sealed blocked, for example by means of a threaded fitting and by insertion of suitable sealing elements, inside an adapter which allows to install the sensor with direct or indirect contact with the pipe shell. Conveniently, the adapter body (25) is realized so that the membrane is not exposed to water pressure but measures the pipe vibrations only by contact. Hydrophone/accelerometers with optical fiber sensors can provide important advantages compared to other known technologies. Thanks to the high intrinsic sensibility of FBG sensors (about 1.2 pm/me) it is possible to displace the sensor resonance peak to higher frequencies without losing information about low frequency elements, thus making the system faster in the response and thus keeping the same performances.

The acoustic pressure levels, in case of water leaks, reported in literature, vary from some mbar to some dozens of mbar, according to the dimension of the leak. In order to detect such pressure variations, it is needed to find a compromise between the high obtainable sensibility reducing the membrane thickness, and the needed sturdiness. In dimensional terms, it is needed to consider further the limit of the membrane maximum diameter, which is dictated by practical needs linked to the maximum dimensions allowed for the sensor for a correct and suitable installation in water systems. As a function of the calculation simulations aiming at analyzing the theoretical behavior of the membrane while applied pressure varies (range [0-10] mbar) and of the thickness of the same (range [10-25] $\mu$m) it was found that a good thickness for the membrane is about 15 $\mu$m, which is a good compromise between sturdiness and sensibility.

Description of a preferred embodiment of an FBG flowmeter

Conveniently, the system according to the invention comprises:

- a sensor for measuring the flow (3), made up of:
- a "bluff body" (31) configured so that vortexes are generated in stable and well identified way in the liquid flow where it is immersed;
- a receiver foil (32) able to be flexed as a function of the overpressure-depression alternating consequent to vortexes, comprising an FBG sensor configured so that deformations due to flex moments exerted by the fluid on the same foil are recorded;
- an acquiring system of the optical signal coming from the FBG sensor, able to function at the foil flexion frequency.

Conveniently, the foil (32) can be realized in fiber-reinforced composite material, with sensors incorporated in the same, or in steel, with sensors glued by means of bi-component epoxy structural adhesive (ARALDITE® type), possibly protected with paint and/or silicone protection.

Preferably, in addition the pressure sensor comprises another Bragg grating, installed on a part of said sensor not deforming after liquid flow, so that it is subject only to deformation due to temperature. In this way, from the deformation of the grating fastened to the foil the contribution due to temperature can be subtracted. Information relating to flowrate is obtained by means of frequency spectrum analysis of the signal detected by FBG sensor.

Description of a preferred embodiment of sensor installation

Preferably, sensors of various type can be installed on a unique point of acquisition.

Description of the acquisition system

Conveniently, the sensors needed for measuring, of the just described type, are connected in series, so that it is possible to use only an optical fiber cable for measuring all the parameters relating to each monitoring point. According to a preferred embodiment, monitoring can be realized according to two different modes:

- *in loco,* by means of direct connection of an opto-electronic acquisition system with the single optical fiber;
- remotely (centralized), by means of connection of more measuring stations with only one fiber cable (dorsal), by using only one opto-electronic acquisition system to read all the sensors provided in the chain.

In both cases the data of the various acquisition systems provided in the system will be sent to a unique remote center of data reception and processing, preferably by means of a wireless network.

Description of the leaks pre-localization method As yet said, the system according to the invention comprises a computer program implementing a logic aiming at individuating leaks.

The first step of the leaks individuation method according to the present invention is the construction and calibration of an information model of the waterworks under study, containing water data (diameters, length and pipes interconnections, flowrate and pressure in the various pipe sections), the topological data of the network and the water consumptions in the various user points. In such way, the model is able to represent realistically the waterworks hydraulic functioning. The model can be realized with any information tool, even chosen between the information tools known at the state of the art. Once a network water model has been created, there is the numerical simulation, by means of the calculating model, of a plurality of various leak scenarios, in which each leak scenario is defined by a number, a position and quantity of water leak introduced in the model.

Therefore, for each leak scenario data relating to pressure and flowrate in the various sections of the waterworks are stored in a suitable database. On the basis of the results obtained with the above cited simulations, it is defined, preferably by means of machine-learning algorithms, a not linear model in which to a cause (number, position, type of simulated leak) corresponds an effect (variation of pressure and flow in the various network sections).

The calculated not linear cause/effect model is then inverted, thus realizing a not linear model which associates a leak scenario to a flowrate/pressure variation in the various network sections. This effect/cause model is used in the next step for pre-localizing leaks as a function of the data measured in the field.

Description of monitoring and of leaks localization method

After installing sensors in a plurality of waterworks points, and after calculating the just described numerical models, the network is monitored continuously. Monitoring is provided with the acquisition, at predetermined time intervals, of pressure and flowrate values. Said data are constantly analyzed in order to evaluate if, in a given network, there is a leak or not. The presence of a leak can be determined for example after observing a clear flowrate or pressure variation in one of the network points, or by an analysis of the minimum night flow.

When it is detected the presence of a leak, for all data acquired from the various pressure and flowrate sensors arranged in the field it is calculated the deviation compared to the expected values in absence of leak provided by the simulation model.

As a function of the deviations between the measured data and the expected values in absence of leaks, it is carried out a pre-localization, by means of which there are identified pipes more probably affected by leaks. The pre-localization output is represented by a group of pipes (tendentially 10% of the whole) where the presence of leak is probable.

Therefore, the values detected by vibration sensors (hydrophones) arranged on all the pipes where the presence of leak is probable, and possibly data acquired by sensors arranged near said pipes, are acquired.

The data detected by these sensors are analyzed by cross-correlation algorithms which allow the position of a leak to be evaluated as a function of the delay of the vibrations caused by the same in various point of the waterworks.

The result of this processing is a list of geo-referenced points identifying the positions of possible leaks. This latter analysis allows to confirm and localize precisely the presence of the leak detected by means of the pre-localization algorithm, and avoids the generation of false alarms, thus allowing to reduce significantly times and costs of research and maintenance.

**Claims**

1. Waterworks monitoring system aiming at identifying and localizing possible leaks, which comprises:

   (i) a plurality of sensors for measuring pressure and flowrate, installed in various points of a water distribution system;
   (ii) connectors configured so that the value of the measure carried out by each one of said sensors is detected and transmitted to remote computing means;
   (iii) remote computing means on which it is implemented an algorithm for analyzing the values detected by said sensors,

   said computing means having access to a database on which there are configured descriptive information about said waterworks,

   on said computing means being loaded calculating models configured so that the hydraulic functioning of said waterworks is simulated, by calculating flowrates and pressures in the various network pipes;
   said system being configured to determine and localize the presence of a leak as a function of the deviation between pressure and flowrate values detected by said sensors and the corresponding pressure and flowrate values calculated by means of said calculating models **characterized in that** said sensors for measuring pressure are sensors in which the sensible element is a Bragg grating, photo-etched on an optical fiber
   said monitoring system further comprising

   - at least an optical fiber in which Bragg gratings are photo-etched at the sensors;
   - at least a wide band light source configured to illuminate said optical fiber;
   - at least an optical spectrum analyzer to analyze the light reflected by said sensors, through said optical fiber And **in that** said sensors for measuring pressure comprise a membrane on which it is glued an optical fiber with a Bragg grating photo-etched thereon, so that the deformation of the grating is a function of the membrane deformation, said membrane being positioned inside a hollow element fastened to the pipe of said waterworks, so that the membrane is exposed to water pressure.

2. Waterworks monitoring system according to claim 1, **characterized in that** said computing means are configured to calculate a not linear relation between pressures and flowrates calculated in the various sections of said waterworks and a leak scenario, wherein said leak scenario is defined by the number, position, and quantity of the leaks in said network.

3. Waterworks monitoring system according to claim 1 or 2, comprising further a plurality of sensors for measuring vibrations in various points of said waterworks,
   and **characterized in that**
   said computing means are configured to analyze data by means of cross-correlation algorithms which allow the position of a leak to be evaluated as a function of the delay of the vibrations caused by the same in various points of the waterworks and to output a list of geo-referenced points identifying the positions of possible leaks.

4. Waterworks monitoring system according to claim 3, **characterized in that** said sensors for measuring vibrations comprise a metal membrane at whose center it is glued an optical fiber on which a Bragg grating is photo-etched, said membrane being sealed blocked inside an adapter which allows the sensor to be put in direct or indirect contact with the pipe so that said membrane is not exposed to water pressure but measures only, by contact, the pipe vibrations.

5. Waterworks monitoring system according to any one of the preceding claims, **characterized in that** said sensors for flow measuring comprise:

   - a "bluff body" (31) configured so that vortexes are generated in the liquid where it is immersed;
   - a receiver foil (32) able to be flexed as a function of the overpressure-depression alternating consequent to vortexes,
   - a Bragg grating sensor configured so that deformations of said foil are recorded;

   **in that**

   - it is provided an acquisition system of the optical signal coming from the FBG sensor,

   and **in that**
   the flowrate measure is obtained by frequency spectrum analysis of the signal detected by said at least one FBG sensor.

**Patentansprüche**

1. System zur Überwachung von Wasserbauwerken zur Identifizierung und Lokalisierung möglicher Lecks, umfassend:

(i) eine Vielzahl von Sensoren zum von Druck- und Durchflussmessungen, die an verschiedenen Punkten in einem Wasserverteilungssystem installiert sind;
(ii) Verbinder, die so konfiguriert sind, dass der Wert der von jedem der Sensoren durchgeführten Messung erfasst und an entfernte Berechnungsmittel übertragen wird;
(iii) entfernte Berechnungsmittel, auf denen ein Algorithmus zum Analysieren der von den Sensoren erfassten Werte implementiert ist,

wobei die Berechnungsmittel Zugriff auf eine Datenbank haben, in der beschreibende Informationen zu den Wasserbauwerken konfiguriert sind,

wobei auf solchen Berechnungsmittel Modelle mit Berechnungen geladen werden, die so konfiguriert sind, dass sie den hydraulischen Betrieb der Wasserbauwerke simulieren, indem sie Durchflussraten und Drücke in den verschiedenen Leitungen des Netzes berechnen;
wobei das System dazu konfiguriert ist, das Vorhandensein eines Lecks als Funktion der Differenz zwischen den von den Sensoren erfassten Druck- und Durchflusswerten und den entsprechenden Druck- und Durchflusswerten, die mittels der Berechnungsmodelle berechnet wurden, zu bestimmen und lokalisieren,
**dadurch gekennzeichnet, dass** die Sensoren zur Druckmessung Sensoren sind, deren empfindliches Element ein auf eine optische Faser fotogeätztes Bragg-Gitter ist,
wobei das Überwachungssystem ferner umfasst

- mindestens eine optische Faser, in die Bragg-Gitter im Bereich der Sensoren fotogeätzt sind;
- mindestens eine Breitbandlichtquelle, die dazu konfiguriert ist, die optische Faser zu beleuchten;
- mindestens einen optischen Spektrum-Analysator zum Analysieren des von den Sensoren reflektierten Lichts durch die optische Faser, und dadurch,

dass die Sensoren zur Druckmessung eine Membran umfassen, auf die eine optische Faser mit einem fotogeätzten Bragg-Gitter darüber geklebt ist, so dass die Verformung des Gitters eine Funktion der Verformung der Membran ist, wobei die Membran in einem hohlen Element positioniert ist, das an der Leitung des Wasserbauwerkes befestigt ist, so dass die Membran dem Druck des Wassers ausgesetzt ist.

2. System zur Überwachung von Wasserbauwerken nach Anspruch 1, **dadurch gekennzeichnet, dass** die Berechnungsmittel so konfiguriert sind, dass sie eine nichtlineare Beziehung zwischen den in den verschiedenen Abschnitten der Wasserbauwerke berechneten Druck-und Durchflussraten und einem Leck-Szenario berechnen, wobei das Leck-Szenario definiert ist durch die Anzahl, Position und Menge von Lecks in dem Netzwerk.

3. System zur Überwachung von Wasserbauwerken nach Anspruch 1 oder 2, ferner umfassend eine Vielzahl von Sensoren zum Messen der Vibrationen an verschiedenen Punkten der Wasserbauwerke, und **dadurch gekennzeichnet,**
**dass** die Berechnungsmittel konfiguriert sind, um Daten mittels Kreuzkorrelation durch Algorithmen zu analysieren, die es ermöglichen, die Position eines Lecks gemäß der Verzögerung der von ihm verursachten Vibrationen an verschiedenen Punkten der Wasserbauwerke zu bewerten und eine Liste georeferenzierter Punkte zu erstellen, die die Positionen möglicher Lecks identifizieren.

4. System zur Überwachung von Wasserbauwerken nach Anspruch 3, **dadurch gekennzeichnet, dass** die Sensoren zur Vibrationsmessungen eine Metallmembran umfassen, in deren Mitte eine optische Faser geklebt ist, auf der ein Bragg-Gitter fotogeätzt ist, wobei die Membran innerhalb eines Adapters versiegelt und blockiert ist, der ermöglicht es, den Sensor in direktem oder indirektem Kontakt mit der Leitung zu platzieren, so dass die Membran nicht dem Druck des Wassers ausgesetzt ist, sondern nur durch Kontakt die Vibrationen der Leitung misst.

5. System zur Überwachung von Wasserbauwerken nach einem der vorhergehenden Ansprüche, **dadurch gekennzeichnet, dass** die Sensoren zum Durchflussmessungen umfassen:

- einen "bluff body" (31), der so konfiguriert ist, dass dort, wo er in der Flüssigkeit eingetaucht ist, Wirbel erzeugt werden;
- ein Aufnahmeblech (32), das sich entsprechend dem Wechsel von Überdruck und Unterdruck nach den Wirbeln biegen kann,
- einen Bragg-Gitter-Sensor, der so konfiguriert ist, dass darin die Verformungen des Blechs aufgezeichnet werden;
- ein System zum Erfassen des optischen Signals von dem FBG-Sensor wird bereitgestellt,

und dadurch,
dass die Durchflussmessung durch Analysieren des Frequenzspektrums des von dem mindestens einen FBG-Sensor erfassten Signals erhalten wird.

**Revendications**

1. Système de surveillance d'ouvrages hydrauliques visant à identifier et localiser d'éventuelles fuites, qui comprend :

   (i) une pluralité de capteurs pour mesurer la pression et le débit, installés en divers points d'un système de distribution d'eau ;
   (ii) des connecteurs configurés pour que la valeur de la mesure effectuée par chacun desdits capteurs soit détectée et transmise à des moyens informatiques distants;
   (iii) des moyens informatiques distants sur lesquels est mis en œuvre un algorithme d'analyse des valeurs détectées par lesdits capteurs, lesdits moyens informatiques ayant accès à une base de données sur laquelle sont configurées des informations descriptives sur lesdits ouvrages hydrauliques, sur lesdits moyens de calcul étant chargés des modèles de calcul configurés pour simuler le fonctionnement hydraulique desdits ouvrages hydrauliques, en calculant des débits et des pressions dans les différentes conduits du réseau ;

   ledit système étant configuré pour déterminer et localiser la présence d'une fuite en fonction de l'écart entre les valeurs de pression et de débit détectées par lesdits capteurs et les valeurs de pression et de débit correspondantes calculées au moyen desdits modèles de calcul,

   **caractérisé en ce que** lesdits capteurs de mesure de pression sont des capteurs dont l'élément sensible est un réseau de Bragg, photogravé sur une fibre optique,
   ledit système de surveillance comprenant en outre

   - au moins une fibre optique dans laquelle des réseaux de Bragg sont photogravés au niveau des capteurs ;
   - au moins une source lumineuse à large bande configurée pour éclairer ladite fibre optique ;
   - au moins un analyseur de spectre optique pour analyser la lumière réfléchie par lesdits capteurs, à travers ladite fibre optique,

   et **en ce que** lesdits capteurs de mesure de pression comprennent une membrane sur laquelle est collée une fibre optique avec un réseau de Bragg photogravé au-dessus, de sorte que la déformation du réseau est fonction de la déformation de la membrane, ladite membrane étant positionnée à l'intérieur d'un élément creux fixé à la conduite dudit ouvrage hydraulique, de sorte que la membrane soit exposée à la pression de l'eau.

2. Système de surveillance d'ouvrages hydrauliques selon la revendication 1, **caractérisé en ce que** lesdits moyens de calcul sont configurés pour calculer une relation non linéaire entre des pressions et des débits calculés dans les différentes sections dudit ouvrage hydraulique et un scénario de fuite, ledit scénario de fuite étant défini par le nombre, position et quantité des fuites dans ledit réseau.

3. Système de surveillance d'ouvrages hydrauliques selon la revendication 1 ou 2, comprenant en outre une pluralité de capteurs pour mesurer les vibrations en divers points dudit ouvrage hydraulique, et **caractérisé en ce que** lesdits moyens de calcul sont configurés pour analyser des données au moyen d'algorithmes de corrélation croisée qui permettent d'évaluer la position d'une fuite en fonction du retard des vibrations provoquées par celle-ci en divers points de l'ouvrage hydraulique et de sortir une liste de points de géo-référencés identifiant les positions d'éventuelles fuites.

4. Système de surveillance d'ouvrages hydrauliques selon la revendication 3, **caractérisé en ce que** lesdits capteurs de mesure de vibrations comportent une membrane métallique au centre de laquelle est collée une fibre optique sur laquelle est photogravé un réseau de Bragg, ladite membrane étant scellée et bloquée à l'intérieur d'un adaptateur qui permet de mettre le capteur en contact direct ou indirect avec la conduite afin que ladite membrane ne soit pas exposée à la pression de l'eau mais mesure uniquement, par contact, les vibrations de la conduite.

5. Système de surveillance d'ouvrages hydrauliques selon l'une quelconque des revendications précédentes, **caractérisé en ce que** lesdits capteurs pour mesurer le débit comprennent :

   - un « bluff body » (31) configuré pour que des vortex soient générés dans le liquide où il est immergé ;
   - une feuille réceptrice (32) apte à fléchir en fonction de l'alternance de surpression-dépression consécutive aux vortex,
   - un capteur à réseau de Bragg configuré pour que les déformations de ladite feuille soient enregistrées ; **en ce que**
   - un système d'acquisition du signal optique issu du capteur FBG est prévu, et **en ce que** la mesure de débit est obtenue par analyse du spectre de fréquence du signal détecté par ledit au moins un capteur FBG.

A. INSTALLATION OF FIELD SENSORS AND DATA ACQUISITION, TRANSMISSION AND PROCESSING SYSTEMS

↓

B. ACQUISITION OF INFORMATION ABOUT WATERWORKS

↓

C. ACQUISITION OF DATA DETECTED BY SENSORS

↓

D. LEAKS PRE-LOCALIZATION

↓

E. CROSS-CORRELATION BETWEEN SIGNALS DETECTED BY HYDROPHONES AND LEAK PUNCTUAL LOCALIZATION

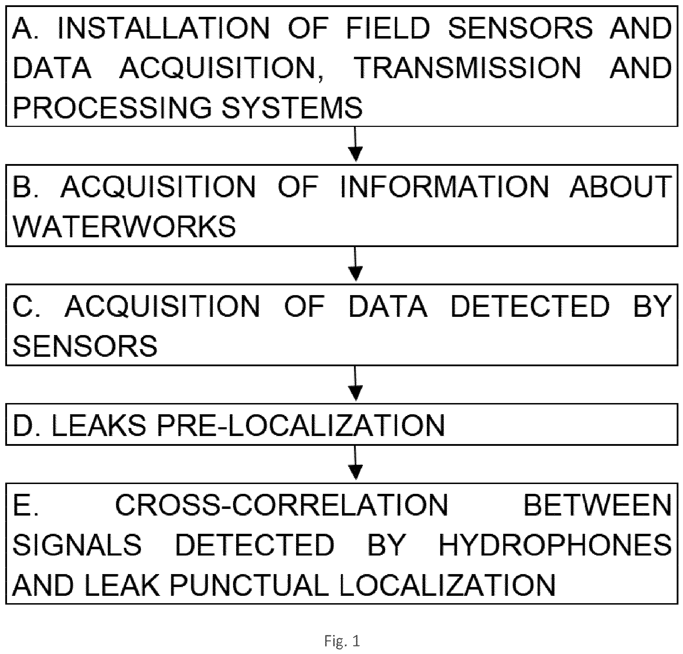

Fig. 1

1

12

11

10

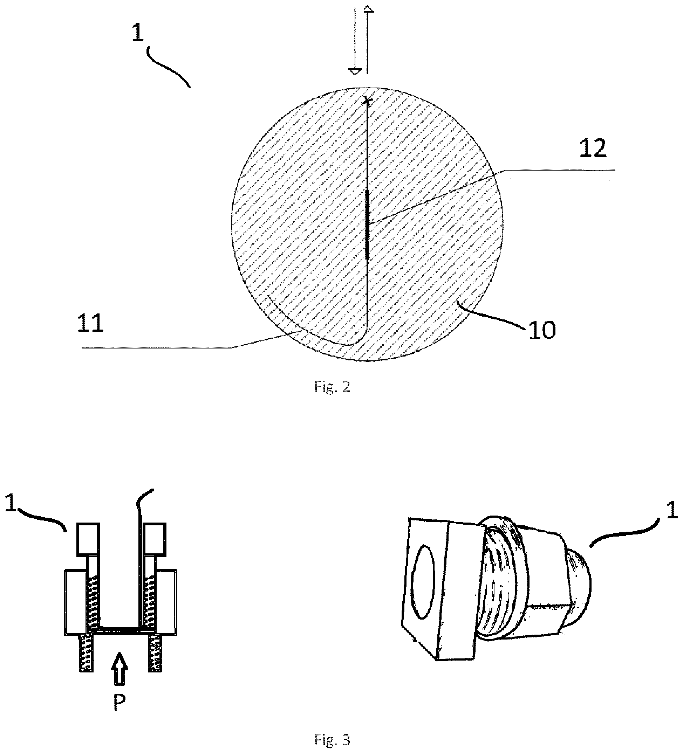

Fig. 2

1

P

1

Fig. 3

1

11

10

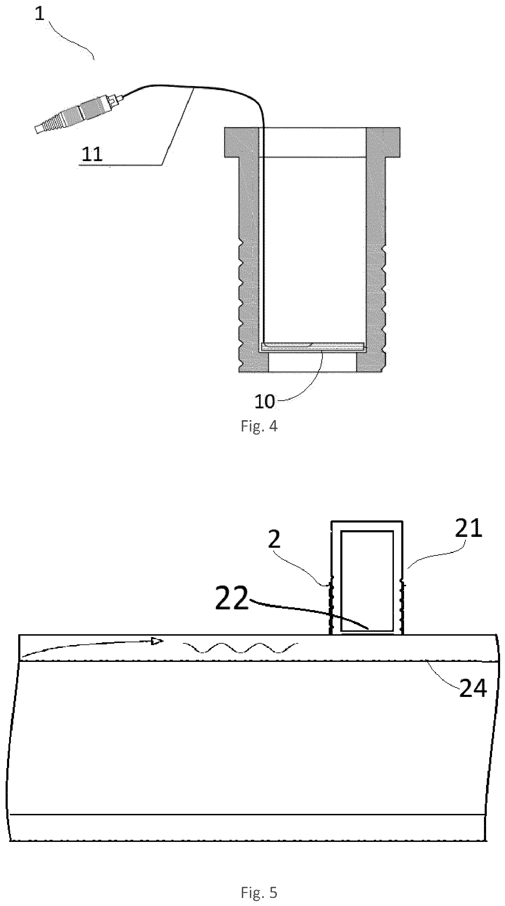

Fig. 4

2

21

22

24

Fig. 5

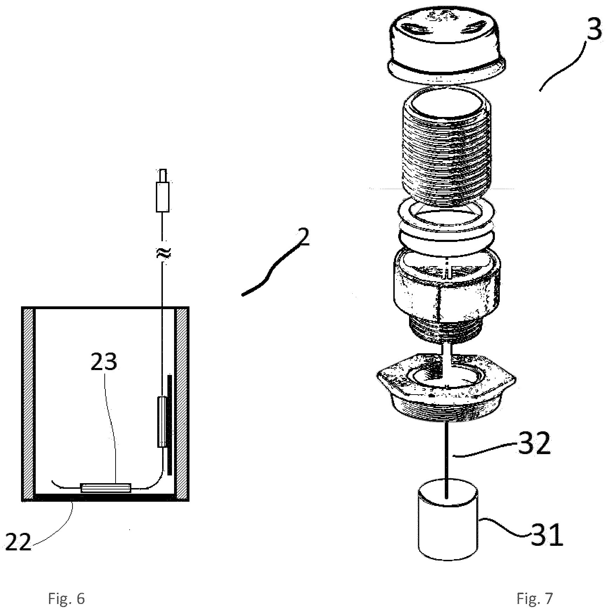

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10094732 B2

- US 2003066359 A1

**Non-patent literature cited in the description**

- A water flowmeter using dual fiber Bragg grating sensors and cross-correlation technique. **TAKASHIMA S et al.** SENSORS AND ACTUATORS A: PHYS. ELSEVIER BV, 04 October 2004, vol. 116, 66-74